# FASCICULE DE BREVET EUROPEEN

(11) **EP 3 233 617 B1**
(45) Date de publication et mention de la délivrance du brevet: **03.10.2018**
(21) Numéro de dépôt: 15828345.7
(22) Date de dépôt: 15.12.2015
(51) Int. Cl.: B62K 3/00, B62K 15/00

(54) **VEHICULE DE TYPE TROTTINETTE REPLIABLE**
ZUSAMMENKLAPPBARER TRETROLLER
COLLAPSIBLE SCOOTER VEHICLE

(30) Priorité: 19.12.2014 FR 1402934
(43) Date de publication de la demande: 25.10.2017
(73) Titulaire: Micro Mobility Systems AG, 8700 Küsnacht (CH)
(72) Inventeur: GROLLEAU, Franck, 28110 Luce (FR)
(74) Mandataire: Daub, Thomas
(86) Numéro de dépôt international: PCT/FR2015/053509
(87) Numéro de publication internationale: WO 2016/097580

(56) Documents cités:
- EP-A1- 2 174 860
- WO-A1-02/46032
- WO-A1-2004/093595
- DE-U1- 29 902 314

## Description

L'invention se rapporte au domaine des véhicules à roulettes de type trottinette, permettant de transporter une personne par le biais d'une plate-forme suffisamment large pour permettre à un utilisateur d'y positionner au moins un pied. De tels véhicules à roulettes comportent aussi un moyen de pilotage, telle une colonne de direction, positionnée sensiblement à l'avant et perpendiculairement par rapport à la plate-forme afin de permettre à l'utilisateur de guider et stabiliser le véhicule.

L'invention vise plus particulièrement un véhicule à roulettes dans lequel la plate-forme supportant l'utilisateur peut pivoter par rapport à une colonne de direction. Une telle colonne de direction équipée de moyens de pilotage comme un guidon ou une poignée permet quant à elle de guider en rotation une fourche avec laquelle coopère au moins une roulette avant.

De façon générale, de tels véhicules à roulettes présentent donc au moins une roulette agencée en dessous de la colonne de direction située à l'avant de la plate-forme selon le sens privilégié d'avancement du véhicule, et comportent également au moins une roulette agencée au niveau d'une extrémité arrière de la plate-forme.

De façon connue, ladite colonne de direction peut être soit composée de tubes agencés coaxialement et coulissants entre eux et verrouillables, soit être composée d'un tube fixe.

Par ailleurs, de tels véhicules à roulettes sont généralement articulés entre la colonne de direction et la plate-forme, de façon à pouvoir plier le véhicule et faciliter ainsi son transport ou son rangement. En effet, l'encombrement du véhicule est considérablement réduit en positionnant la plate-forme sensiblement parallèlement par rapport à la colonne de direction et sensiblement contre cette dernière. De façon connue, l'articulation entre la plate-forme et la colonne de direction est positionnée dans une zone située à l'extérieur de la zone délimitée par le diamètre de la roulette avant et préférentiellement à l'arrière de la colonne de direction selon la direction privilégiée d'avancement du véhicule.

Cependant, un tel positionnement de l'articulation entre la plate-forme et la colonne de direction, d'une part encombre la roulette avant quant le véhicule est plié, ce qui souvent ne permet pas de faire rouler le véhicule sur la roulette avant à la façon d'un trolley, et d'autre part ne permet pas d'obtenir une compacité optimale du véhicule en position pliée.

Par ailleurs, l'utilisateur/trice souhaite pourvoir replier et déplier, sans avoir à se baisser, quasiment automatiquement la colonne de direction sur la plate-forme.

On connait par la demande WO 2004/093595 une valise sur une paroi de laquelle est fixée une structure du type trottinette pliable comportant un manchon. À l'extrémité supérieure du manchon est prévue une poignée, et à l'extrémité inférieure sont montés articulés, selon des axes respectifs horizontaux, parallèles au sol, d'une part une roue, et d'autre part un bloc. Sur ledit bloc est monté en rotation, d'axe vertical, un plateau de trottinette pour recevoir le pied de l'utilisateur/trice. Un piston est monté articulé sur le bloc à son extrémité inférieure, tandis que son extrémité supérieure est disposée à l'intérieur dudit manchon.

Cependant, ce système connu d'une part vise une valise associée à une structure de trottinette, d'autre part ne permet pas d'avoir une roue directrice avant pivotant sensiblement coaxialement avec la colonne de direction et enfin reste d'un encombrement relativement important.

Un premier objectif de l'invention est de proposer un mécanisme permettant à l'utilisateur de plier le véhicule rapidement, sans effort et sans avoir à se baisser. Un second objectif est de proposer un positionnement particulier de l'articulation entre la plate-forme et la colonne de direction afin de garantir un encombrement optimal tant en largeur qu'en hauteur du véhicule en position plié, tout en permettant le dégagement suffisant de la roulette avant afin de pouvoir faire rouler le véhicule en position pliée sur la roulette avant. Un troisième objectif est de proposer une trottinette apte à être dépliée et repliée quasiment sans effort, disposant d'une roue directrice avant tournant sensiblement coaxialement avec la colonne de direction et restant de conception simple. Ces avantages sont appréciables lors d'utilisation d'un tel véhicule à roulettes en milieu urbain et notamment pour emprunter les transports en commun.

A cette fin, selon l'invention, le véhicule à roulettes, de type trottinette, comportant :
- une plate-forme de forme allongée, pourvue à son extrémité arrière d'une roue, et sur laquelle un utilisateur peut reposer au moins un pied ;
- une colonne de direction apte à pivoter autour d'un premier axe, transversal à la direction d'avancement du véhicule, la colonne comprenant une première extrémité distale munie d'un organe de pilotage tel qu'un guidon ou une poignée, et une seconde extrémité proximale associée à une roue avant par l'intermédiaire d'au moins une fourche chevauchant ladite roue avant;
la plate-forme étant montée pivotante par rapport à un second axe, transversal au premier axe, et étant ainsi mobile entre deux positions extrêmes, à savoir une position active de roulement où elle est sensiblement perpendiculaire à la colonne, et une position rabattue parallèle à la colonne et proche de cette dernière ;
le véhicule comprenant en outre un mécanisme à compression, de forme allongée, tel qu'un ressort, dont la première extrémité est associée à ladite plate-forme à une distance non nulle du second axe, et dont la seconde extrémité est associée à ladite colonne, de manière à exercer une force de poussée sur la plate-forme, induisant un moment autour du second axe de pivotement de la plate-forme ;
est caractérisé en ce que ladite plate-forme est reliée à la colonne par un étrier en U inversé enjambant la fourche tout en autorisant la rotation de cette dernière, l'étrier en U présentant deux bras espacés parallèles et le second axe de pivotement étant disposé à l'extrémité libres des bras parallèles de l'étrier.

L'étrier en U inversé permet le positionnement du second axe de rotation à l'intérieur de la zone délimitée par la surface de la roue avant, sans gêner le pivotement sensiblement coaxial de celle-ci avec la colonne de direction.

Le second axe de rotation étant situé à l'intérieur d'une zone délimitée par la surface de la roue avant, permet quant le véhicule est en position repliée, d'une part de réduire son encombrement et d'autre part de dégager la roue avant afin de pouvoir le faire rouler à la façon d'un trolley

Aussi, toujours sans gêner le débattement de la roue avant, l'étrier en U inversé sert de support de fixation au mécanisme à compression et au levier de verrouillage.

Avantageusement, le mécanisme à compression est fixé par sa seconde extrémité sur ledit étrier.

Le mécanisme à compression est fixé par sa première extrémité sur la plate-forme de façon qu'il exerce une force de poussée sur cette dernière en ses deux positions extrêmes.

Afin de réduire les dimensions du véhicule replié, le second axe de rotation est situé à l'intérieur d'une zone délimitée par la surface de la roue avant.

Les points de fixation du mécanisme à compression, respectivement sur l'étrier et sur la plate-forme, sont situés à l'intérieur d'une zone délimitée par la surface de la roue avant.

Il est prévu une butée associée à l'étrier, empêchant dans un sens la rotation de ce dernier et donc de la colonne, autour du premier axe de rotation.

Afin de limiter l'ouverture de la colonne de direction par rapport à la plate-forme, des butées en saillie sont prévues sur l'étrier pour venir en butée sur la plate-forme, arrêtant ainsi la rotation vers l'avant, selon une direction privilégiée d'avancement du véhicule, de la colonne de direction autour du second axe.

Les butées basses 11A et 11B, avec le levier, permettent le blocage de la colonne dans les deux sens.

Afin de sécuriser la position d'utilisation (roulement), le véhicule comporte des moyens de verrouillage de la rotation vers l'arrière, selon une direction privilégiée d'avancement du véhicule, de la colonne de direction autour du second axe de rotation. Ces moyens de verrouillage comportent avantageusement un levier articulé sur l'étrier, entre une première position de blocage où il empêche la rotation réciproque de la plate-forme autour du second axe de rotation, par rapport à la colonne, et une seconde position où il autorise la rotation de la plate-forme.

Le levier est actionnable au pied, ou par tout autre moyen permettant son basculement, pour passer de la position de blocage à la position déploquée (autorisant la rotation réciproque de la colonne et de la plate-forme).

La plate-forme est reliée au second axe de rotation via deux pattes opposées parallèles situées de part et d'autre de la roue avant et des bras de l'étrier, et solidaires en pivotement autour du second axe, les moyens de verrouillage fixés sur l'étrier coopérant avec au moins l'une des pattes par contact en position de blocage correspondant à la position d'utilisation.

La colonne de direction comporte deux tubes coaxiaux coulissant l'un dans l'autre, et une came actionnable par un bouton poussoir, commandant l'escamotage d'un ergot déverrouillant entre eux les deux tubes coaxiaux.

De façon avantageuse, une butée d'amortissement est prévue sur la colonne de direction, et possède une géométrie permettant d'accueillir la roue arrière.

Afin de limiter l'ouverture de la colonne de direction par rapport à la plate-forme, une excroissance est positionnée sur le porte fourche pour venir en butée sur la plate-forme, arrêtant ainsi la rotation vers l'avant, selon une direction privilégiée d'avancement du véhicule, de la colonne de direction.

Selon une autre variante, la plate-forme comporte une structure asymétrique et présente un mono bras articulé sur l'étrier.

L'invention est définie selon les termes de la revendication 1. Les revendications dépendantes 2 à 9 définissent des modes de réalisation avantageux de l'invention. L'invention sera bien comprise à la lumière de la description qui suit d'un exemple donné à titre indicatif et non limitatif, à l'appui des figures annexées dans lesquelles :
- la figure 1 est une vue en perspective d'un véhicule conforme à l'invention, en position d'utilisation ;
- la figure 2 est une vue de détail en perspective de la partie inférieure avant du véhicule de la figure 1 ;
- les figures 3 et 4 sont des vues de détail de coté, en positions respectivement dépliée et repliée de la plate-forme ;
- la figure 5 est une vue en perspective du véhicule de la figure 1, montré de l'autre côté ;
- la figure 6 est une vue de détail en perspective, similaire à la figure 2, vue de l'autre côté ;
- la figure 7 est une vue en perspective du véhicule en position repliée de la plate-forme ;
- la figure 8 est une vue partielle en coupe de la colonne de direction ;
- la figure 9 est une vue en perspective éclatée et partielle de la partie inférieure avant du véhicule ;
- les figures 10 et 11 sont des vues partielles montrant la trottinette en perspective, la roue avant étant tournée respectivement à droite et gauche.

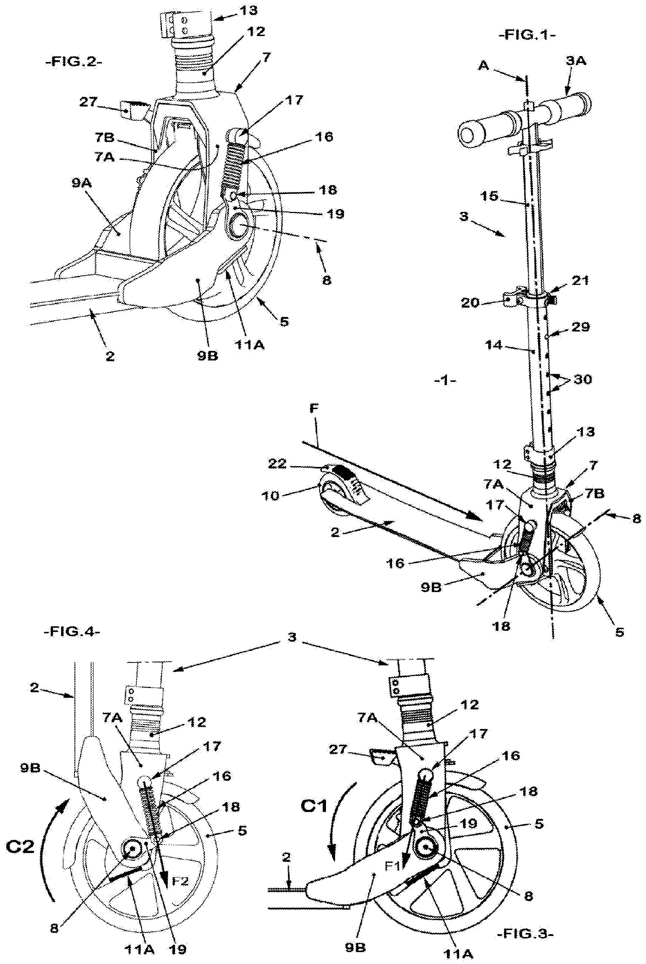

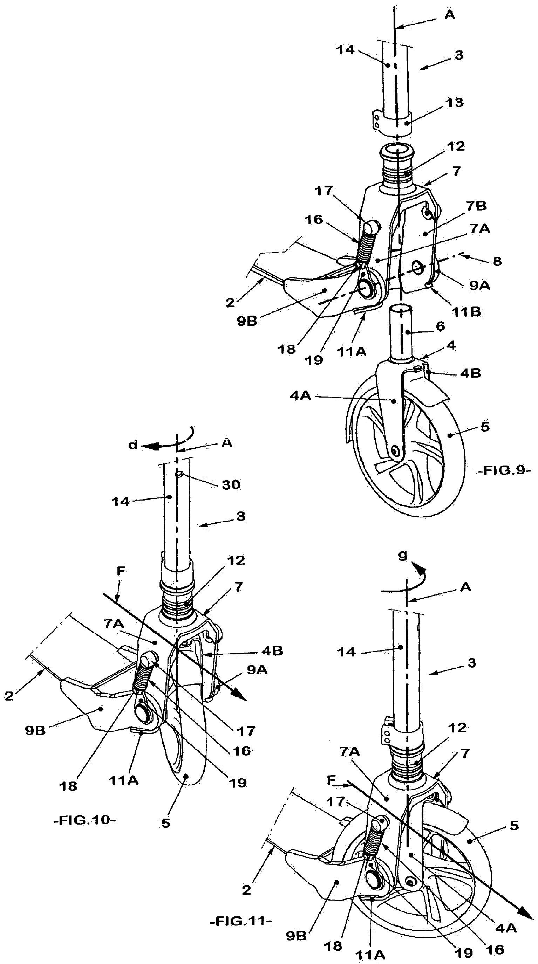

La figure 1 montre une trottinette 1 en position d'utilisation, et comportant :
- une plate-forme 2 de forme allongée et sur laquelle un utilisateur (non représenté) peut poser un pied, l'autre pied étant posé sur le sol pour exercer une poussée (flèche F) vers l'avant ;
   - une colonne de direction 3 tubulaire, disposée orthogonalement à la plate-forme 2 (en position d'utilisation de la figure 1), et apte à pivoter autour d'un premier axe A, qui est l'axe longitudinal de la colonne ; la colonne est associée, à son extrémité inférieure, à une fourche 4 (particulièrement visible sur les figures 9 à 11) pourvue de deux bras parallèles 4A et 4B à l'extrémité distale desquels une roue avant 5 est montée à rotation selon un axe parallèle au sol, en cours d'utilisation ; la fourche 4 comporte, en partie supérieure, un goujon 6 cylindrique (figure 9) ; l'extrémité supérieure (distale) de la colonne 3 est munie d'un guidon transversal 3A ; la roue avant pivote sensiblement coaxialement avec la colonne de direction suivant le premier axe de rotation ;
- un étrier 7 comportant deux bras parallèles 7A et 7B, enjambant ladite fourche 4.

La plate-forme 2 est montée articulée, selon un second axe 8 de rotation (parallèle au sol en cours d'utilisation), sur les extrémités distales de chaque bras 7A et 7B de l'étrier 7. Ces extrémités sont situées à l'intérieur de la zone délimité par la surface de la roue avant 5.

Plus précisément, l'extrémité avant de la plate-forme 2, c'est-à-dire à proximité de la colonne de direction 3, est pourvue de deux pattes planes allongées, parallèles l'une à l'autre, respectivement gauche 9A et droite 9B. Les pattes sont disposées chacune dans un plan perpendiculaire au sol, en cours d'utilisation de la trottinette, et présentent une légère inclinaison vers le haut, par rapport au plan de la plate-forme 2.

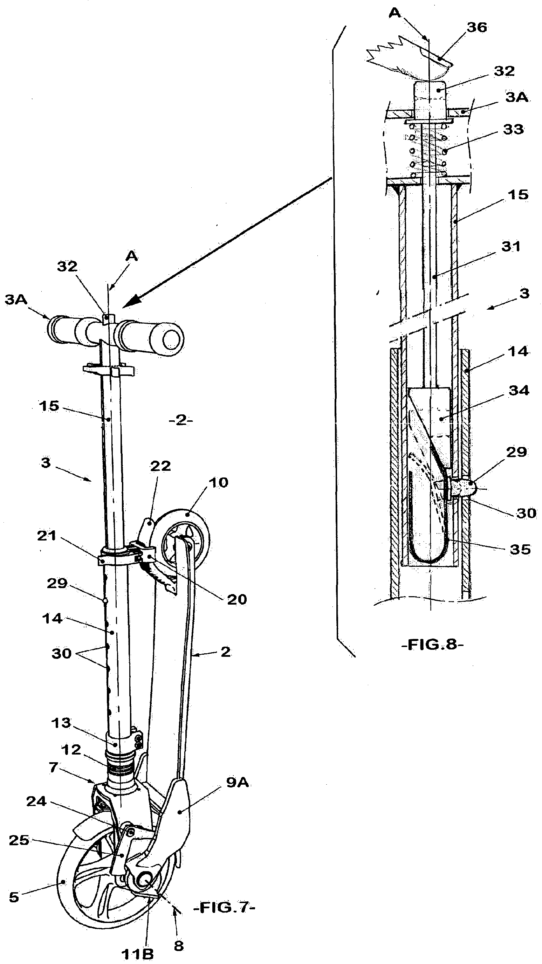

Ainsi, la plateforme 2 est montée en rotation, autour du second axe de rotation 8, entre une première position extrême dite d'utilisation, où elle est sensiblement perpendiculaire à la colonne de direction 3 et parallèle au sol (figures 1, 5 et 9), et une seconde position dite repliée, où elle est rabattue à proximité de la colonne de direction, et sensiblement parallèle à cette dernière (figures 4 et 7).

Les dimensions de la trottinette repliée sont réduites grâce au fait que le second axe de rotation 8 est situé à l'intérieur d'une zone délimitée par la surface de la roue avant 5.

À l'extrémité arrière, opposée à la colonne de direction 3, de la plate-forme 2, est montée à rotation libre une roue arrière 10, de diamètre équivalent ou plus petit que la roue avant 5. Un flasque 22 relativement flexible recouvre à proximité immédiate la roue arrière 10 et sert de frein lorsque l'on applique une pression dessus par le pied.

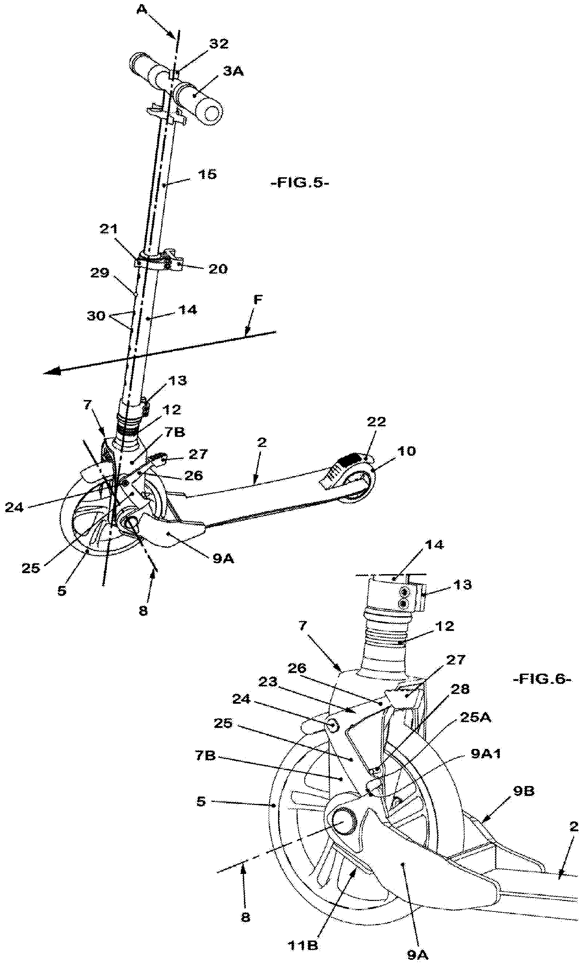

La colonne de direction 3 est montée à rotation autour de son axe longitudinal A, qui est sensiblement vertical ou très légèrement incliné par rapport au sol, en cours d'utilisation de la trottinette (figures 1 et 5).

Particulièrement, le sommet de l'étrier 7 est pourvu d'un manchon cylindrique 12 apte à recevoir le goujon 6 (figure 9) de la fourche 4. Le goujon 6 dépasse du manchon creux 12 pour permettre à la colonne de direction 3 de s'emmancher sur ledit goujon. Un collier de serrage 13 permet de solidariser ainsi la colonne de direction 3 avec le goujon 6, et donc avec la fourche 4, la colonne étant donc reliée sensiblement coaxialement à la roue pour sa manoeuvre.

On comprend que l'ensemble formé par la colonne de direction 3 et la fourche 4, est mobile en rotation selon l'axe subvertical A, par rapport à l'ensemble formé par la plate-forme 2 et l'étrier 7 (et le manchon creux 12).

Plus précisément, la fourche 4 pivote à l'intérieur de l'étrier 7, le goujon 6 étant guidé en rotation dans le manchon creux 12.

Les figures 10 et 11 montrent les positions respectives de la roue avant 5 et la fourche associée 4, tournée à droite (flèche « d ») et à gauche (flèche « g ») autour du premier axe A de rotation de la colonne, par action de l'utilisateur/trice sur le guidon 3A (qui n'est pas représenté sur les vues partielles des figures 10 et 11).

En référence aux figures 1 et 5, la colonne de direction 3 est constituée de deux tubes télescopiques, à savoir un tube inférieur 14, rendu solidaire en rotation du goujon 6 et donc de la fourche 4, et un tube supérieur 15, dont le diamètre extérieur correspond sensiblement, en étant très légèrement inférieur, au diamètre intérieur du tube inférieur 14. Le tube supérieur 15 coulisse ainsi dans le tube inférieur 14. Il est prévu un moyen de positionnement réglable du tube mobile 15 dans le tube inférieur 14, décrit ultérieurement.

Par ailleurs, il est prévu un mécanisme à compression associé à l'étrier 7, de forme allongée, tel qu'un ressort de compression 16, dont :
- la première extrémité est associée à la plate-forme 2 par un pivot 18 situé à une distance non nulle du second axe de rotation 8 ; et
- la seconde extrémité est fixée sur un pivot 17 prévu sur le bras 7A de l'étrier 7.

Plus particulièrement, la première extrémité du ressort 16 est fixée par un pivot 18 à l'extrémité distale d'une languette 19 rigide dont l'extrémité proximale est solidaire en rotation de l'axe 8 et solidaire de la patte 9B. La languette 19 est donc équivalent à une excroissance associée à la plate-forme 2 et forme un angle d'environ 120° avec cette dernière. L'excroissance peut être moulée avec le bras 9B.

Le ressort 16, prenant appui sur le pivot 17, solidaire de l'étrier 7, lui-même lié à la colonne de direction 3, exerce une force de poussée sur la plate-forme 2, par l'intermédiaire du pivot 18 situé sur la languette 19, cette dernière faisant office de levier.

Les points de fixation 17 et 18 du ressort 16 sont, selon la forme décrite, situés à l'intérieur d'une zone délimitée par la surface de la roue avant 5..

Le rôle et la fonction du ressort 16 sont expliqués ultérieurement.

En position repliée de la plate-forme contre la colonne de direction, comme représenté à la figure 7, il est prévu un organe de solidarisation 20, solidaire (éventuellement de manière amovible) de la colonne de direction 3 par un collier 21, et en forme générale de U. L'organe 20 coopère, par exemple par clipsage, avec la roue arrière 10 ou avec le flasque 22 recouvrant celle-ci et servant de frein, par pression de contact dû à la force exercée par le mécanisme à compression.

L'organe de solidarisation 20 sert d'une part à amortir le choc de la remontée de la plate-forme 2 sur la colonne de direction 3, et d'autre part à empêcher la plate-forme 2 de tourner en rotation autour du premier axe A de la colonne de direction 3.

Comme monté sur les figure 2 et 6, il est prévu des excroissances respectivement 11A et 11B sur l'étrier 7A et 7B, destinées à venir en butée respectivement sur les bras 9B et 9A arrêtant ainsi dans un premier sens, le pivotement entre la plate-forme 2 et la colonne 3.

En référence aux figures 5, 6 et 7, la trottinette comporte, à l'opposé du plan contenant le ressort 16, un levier en L 23, articulé en son coude sur un pivot 24 fixé sur l'étrier 7 (sur le bras 7B de l'étrier).

Le levier 23 comprend une branche inférieure 25 et une branche supérieure 26 (disposées approximativement perpendiculairement), l'intérieur de l'angle étant tourné vers la plate-forme 2 en position dépliée de cette dernière). Le levier 23 est destiné à coopérer avec la patte 9A solidaire de la plate-forme 2 de façon à verrouiller ou déverrouiller, dans un second sens, le pivotement entre la plate-forme 2 et la colonne 3.

Le levier est mobile en rotation autour du pivot 24 entre :
- une première position (figure 6 pour laquelle la plate-forme 2 est dépliée) où sa branche 25 porte par son chant d'extrémité distale 25A contre le chant d'extrémité distal 9A1 de la patte 9A ; la rotation de la patte 9A et donc de la plate-forme (autour de l'axe 8) est ainsi empêchée ; la plate-forme est verrouillée en position d'utilisation de roulement ;
- une seconde position (figure 7 pour laquelle la plate-forme est repliée) où le levier 23 a tourné autour du pivot 24, selon un premier sens de rotation, de façon à dégager la branche 25 de la patte 9A, ce qui autorise la rotation de la plate-forme autour de l'axe 8 et donc son repliement contre la colonne 3.

Tel que représenté à la figure 6, l'extrémité distale de la branche supérieure 26 du levier 23 comporte un bloc 27 pour permettre à l'utilisateur/trice d'y appuyer, par exemple, le bout de son pied, de façon à faire pivoter le levier 23 en vue de le dégager du chant 9A1 de la patte 9A.

Comme montré sur la figure 6, il est prévu une butée 28 sur l'étrier 7 destiné à empêcher le levier 23 de poursuivre sa rotation, afin de le maintenir tel que montré sur la figure 6, où le levier bloque la rotation du bras 9A ou celle de la colonne 3.

Selon la figure 8, la trottinette comporte un moyen permettant de verrouiller et déverrouiller la translation relative du tube supérieur intérieur 15 dans le tube inférieur 14 de la colonne de direction.

Ledit moyen comporte un téton escamotable 29 sur le tube supérieur intérieur 15, apte à traverser en partie des trous 30 alignés, espacés, prévus sur le tube inférieur 14.

La figure 8 montre en coupe selon un plan vertical, la partie supérieure de la colonne, où il est prévu une tige 31 à l'intérieur du tube supérieur 15. L'extrémité supérieure de la tige 31 traverse le guidon transversal 3A, est munie d'un bouton poussoir 32. Un ressort 33 est disposé coaxialement à la tige 31 et à l'intérieur du guidon 3A.

L'extrémité inférieure de la tige 31 comporte un coin 34 butant contre un ressort à lame 35 associé au téton 29.

En partant de la position montrée sur la figure 8, lorsque l'utilisateur (doigt 36) presse le bouton poussoir 32 vers le bas, le coin 34 repousse transversalement le ressort 35 et translate le téton 29 vers l'intérieur du tube supérieur 15, de façon à ce que le téton ne traverse plus le trou 30 correspondant du tube inférieur 14. On aboutit à la représentation en pointillé sur la figure 8. Le tube supérieur 15 peut alors coulisser dans le tube inférieur 14.

A la lumière des figures 3 et 4, on décrit ci-après le fonctionnement du mécanisme à ressort de compression 16 lors du passage de la colonne de direction de sa position d'utilisation (figures 1 et 5) pour le roulement sur le sol, vers sa position repliée contre la plate-forme (figures 4 et 7), pour le transport de la trottinette.

Partant de la position d'utilisation (roulement sur le sol) de la figure 3 jusqu'à la position repliée (figure 4), le pivotement (flèche C2) de la plate-forme 2 vers la colonne 3 (ou l'inverse selon la flèche C1 pour déployer) entraîne le pivotement de la languette 19 autour du second axe de rotation 8, et dans l'exemple montré de la figure 3 à la figure 4, dans le sens horaire.

Au départ (figure 3), le pivot inférieur 18 (de la seconde extrémité du ressort 16) situé à l'extrémité distale de la languette 19 se trouve d'un côté de la droite joignant le pivot supérieur 17 (de la première extrémité du ressort 16) au second axe de rotation 8.

Lors de la rotation de la plate-forme (ou de la colonne autour du second axe 8), le pivot inférieur 18 passe de l'autre côté de ladite droite (joignant le pivot supérieur 17 au second axe de rotation 8 (figure 4).

Dans toutes les positions, intermédiaires ou extrêmes, de la plate-forme par rapport à la colonne (ou inversement), le ressort 16 exerce une force (F1 - figure 3 et F2 - figure 4) qui crée un moment, appliqué via la languette 19 à la plate-forme, cette dernière étant ainsi maintenue dans l'une de ses positions extrêmes (utilisation ou repliée). Le ressort 16 qui est de préférence hélicoïdal, est à l'état comprimé et de repos en position d'utilisation de la plate-forme et à l'état tendu en position repliée de la plate-forme.

Partant de la position d'utilisation, l'utilisateur/trice appuie sur le bloc 27 du levier 23, ce qui provoque la rotation de ce dernier et libère donc le bras 9A qui était bloqué (figure 6). Une légère inclinaison de la colonne 3 effectuée par l'utilisateur/trice, provoque le changement de sens du moment de C1 vers C2 et la force du ressort (figure 3) aide à la rotation réciproque de la colonne par rapport à la plate-forme, et la colonne se rabat alors contre cette dernière (ou inversement).

La force de compression du ressort 16 est choisie pour compenser (au moins en grande partie) le poids de la plate-forme, afin que celle-ci s'élève automatiquement, sous l'action du moment, pour se replier contre la colonne de direction.

## Revendications

1. Véhicule à roulettes, de type trottinette (1), comportant :
- une plate-forme (2) de forme allongée, pourvue à son extrémité arrière d'une roue (10), et sur laquelle un utilisateur peut reposer au moins un pied ;
- une colonne de direction (3) apte à pivoter autour d'un premier axe (A), transversal à la direction d'avancement du véhicule (1), la colonne (3) comprenant une première extrémité distale munie d'un organe de pilotage tel qu'un guidon (3A, 3B) ou une poignée, et une seconde extrémité proximale associée à une roue avant par l'intermédiaire d'au moins une fourche (4) chevauchant ladite roue avant (5);
la plate-forme (2) étant montée pivotante par rapport à un second axe (8), transversal au premier axe (A), et étant ainsi mobile entre deux positions extrêmes, à savoir une position active de roulement où elle est sensiblement perpendiculaire à la colonne (3), et une position rabattue parallèle à la colonne (3) et proche de cette dernière ;
le véhicule (10) comprenant en outre un mécanisme à compression, de forme allongée, tel qu'un ressort (16), dont la première extrémité est associée à ladite plate-forme (2) à une distance non nulle du second axe, et dont la seconde extrémité est associée à ladite colonne (3), de manière à exercer une force de poussée sur la plate-forme (2), induisant un moment autour du second axe (8) de pivotement de la plate-forme (2) ;
**caractérisé en ce que** ladite plate-forme (2) est reliée à la colonne (3) par un étrier (7) en U inversé enjambant la fourche (4) tout en autorisant la rotation de cette dernière, l'étrier (7) en U présentant deux bras (7A, 7B) espacés parallèles et le second axe (8) de pivotement étant disposé à l'extrémité libres des bras (7A, 7B) parallèles de l'étrier (7),
le second axe (8) de rotation étant situé à l'intérieur de la zone délimitée par la surface de la roue avant (5).

2. Véhicule selon la revendication 1, **caractérisé en ce que** le mécanisme à compression est fixé par sa seconde extrémité sur ledit étrier (7).

3. Véhicule selon l'une des revendications 1 ou 2, **caractérisé en ce que** le mécanisme à compression est fixé par sa première extrémité sur la plate-forme (2) de façon qu'il exerce une force de poussée sur cette dernière en ses deux positions extrêmes.

4. Véhicule selon l'une des revendications 1 à 3, **caractérisé en ce que** les points de fixation du mécanisme à compression soient disposés autour du second axe (8) de rotation de façon à provoquer, lors de la rotation de la colonne de direction (3) au passage d'une position angulaire donnée, l'inversion du sens dudit moment exercé par ledit mécanisme.

5. Véhicule selon l'une des revendications 1 à 4, **caractérisé en ce qu'**il est prévu au moins une butée (28) associée à l'étrier (7), empêchant dans un premier sens, la rotation de ce dernier et donc de la colonne (3), autour du second axe (8) de rotation.

6. Véhicule selon l'une des revendications 1 à 5, **caractérisé en ce qu'**il comporte des moyens de verrouillages actionnables au pied ou par tout autres moyens, de la rotation dans un second sens, de la plate-forme (2) autour du second axe (8), lesdits moyens de verrouillage comportent avantageusement un levier (23) articulé sur l'étrier (7), entre une première position de blocage où il empêche la rotation réciproque de la plate-forme (2) autour du second axe (8) de rotation, par rapport à la colonne (3), et une seconde position où il autorise la rotation de la plate-forme (2).

7. Véhicule selon l'une des revendications 1 à 6, **caractérisé en ce que** la plate-forme (2) est reliée au second axe (8) de rotation via deux pattes (9A, 9B) opposées parallèles situées de part et d'autre de la roue avant (5) et des bras (7A, 7B) de l'étrier (7), et solidaires en pivotement autour du second axe (8), les moyens de verrouillage fixés sur l'étrier (7) coopérant avec au moins l'une des pattes (9A, 9B) par contact en position de blocage correspondant à la position d'utilisation.

8. Véhicule selon l'une des revendications 1 à 7, **caractérisé en ce que** la roue directionnelle avant (5) pivote sensiblement coaxialement avec la colonne de direction (3) suivant le premier axe (A) de rotation.

9. Véhicule selon l'une des revendications 1 à 8, **caractérisé en ce que** la colonne de direction (3) comporte deux tubes (14, 15) coaxiaux coulissant l'un dans l'autre, et une came actionnable par un bouton poussoir (32), commandant l'escamotage d'un ergot déverrouillant entre eux les deux tubes (14, 15) coaxiaux.

## Patentansprüche

1. Fahrzeug mit Rollen, vom Typ Tretroller (1), das umfasst:
- eine Plattform (2), in länglicher Form, welche an ihrem hinteren Ende mit einem Rad (10) versehen ist und auf der ein Benutzer wenigstens einen Fuß aufstellen kann;
- eine um eine erste Achse (A) schwenkbare Lenkstange (3), welche quer zur Vorwärtsbewegungsrichtung des Fahrzeugs (1) ist, wobei die Stange (3) ein erstes distales, mit einem Steuermittel, wie etwa einem Lenker (3A, 3B) oder einem Griff, ausgestattes Ende aufweist, und ein zweites proximales Ende aufweist, welches mit einem Vorderrad (5) über zumindest eine, das Vorderrad (5) übergreifende Gabel (4) verbunden ist;
wobei die Plattform (2) so montiert ist, dass sie relativ zu einer zweiten, zur ersten Achse (A) queren Achse (8) schwenkbar und somit zwischen zwei Extrempositionen beweglich ist, nämlich einer aktiven Position des Rollens, in der sie im Wesentlichen senkrecht zur Stange (3) ist, und einer eingeklappten Position parallel zur Stange (3) und nahe bei dieser;
wobei das Fahrzeug (10) des Weiteren einen Kompressionsmechanismus von länglicher Form umfasst, beispielsweise eine Feder (16), dessen erstes Ende mit besagter Plattform (2) in einem von Null verschiedenen Abstand zu der zweiten Achse (8) verbunden ist, und dessen zweites Ende mit besagter Stange (3) verbunden ist, um eine Hubkraft auf die Plattform (2) auszuüben, wodurch ein Drehmoment um die zweite Schwenkachse (8) der Plattform (2) erzeugt wird;
**dadurch gekennzeichnet, dass** besagte Plattform (2) mit der Stange (3) über einen Bügel (7) in umgekehrter U-Form, der die Gabel (4) überspannt und dabei eine Rotation der letzteren zulässt, verbunden ist, wobei der U-förmige Bügel (7) zwei beabstandete parallele Arme (7A, 7B) aufweist und die zweite Schwenkachse (8) an den freien Enden der parallelen Arme (7A,7B) des Bügels (7) angeordnet ist,
wobei die zweite Rotationsachse (8) innerhalb eines durch die Oberfläche des Vorderrades (5) begrenzten Bereichs liegt.

2. Fahrzeug nach Anspruch 1, **dadurch gekennzeichnet, dass** der Kompressionsmechanismus mit seinem zweiten Ende auf besagtem Bügel (7) befestigt ist.

3. Fahrzeug nach einem der Ansprüche 1 oder 2, **dadurch gekennzeichnet, dass** der Kompressionsmechanismus mit seinem ersten Ende so auf der Plattform (2) befestigt ist, dass er in seinen zwei Extrempositionen eine Hubkraft auf die Plattform (2) ausübt.

4. Fahrzeug nach einem der Ansprüche 1 bis 3, **dadurch gekennzeichnet, dass** die Befestigungspunkte des Kompressionsmechanismus so um die zweite Rotationsachse (8) angeordnet sind, dass sie bei der Rotation der Lenkstange (3) beim Passieren einer vorgegebenen Winkelposition die Richtungsumkehrung des durch den Mechanismus erzeugten Drehmoments hervorrufen.

5. Fahrzeug nach einem der Ansprüche 1 bis 4, **dadurch gekennzeichnet, dass** wenigsten ein mit dem Bügel (7) verbundener Anschlag (28), vorgesehen ist, welcher in einer ersten Richtung die Rotation des Bügels (7), und damit der Stange (3), um die zweite Rotationsachse (8) verhindert.

6. Fahrzeug nach einem der Ansprüche 1 bis 5, **dadurch gekennzeichnet, dass** es mit dem Fuß oder mit beliebigen anderen Mitteln bedienbare Blockiervorrichtungen aufweist, zum Blockieren einer Rotation der Plattform (2) um die zweite Achse (8) in einer zweiten Richtung (wobei die Blockiervorrichtungen vorteilhaft einen mit dem Bügel (7) gelenkig verbundenen Hebel (23) aufweisen), zwischen einer ersten Blockierposition, in der der Hebel (23) die Hin-und Herbewegung der Plattform (2) um die zweite Rotationsachse (8) relativ zu der Stange (3) verhindert, und einer zweiten Position, in der er die Rotation der Plattform (2) zulässt.

7. Fahrzeug nach einem der Ansprüche 1 bis 6, **dadurch gekennzeichnet, dass** die Plattform (2) mit der zweiten Rotationsachse (8) über zwei parallele, einander gegenüberliegende, jeweils auf einer Seite des Vorderrades (5) angeordnete Schenkel (9A, 9B) und Arme (7A, 7B) des Bügels (7) verbunden ist, welche bei einem Schwenken um die zweite Achse (8) kraftschlüssig verbunden sind, wobei die auf dem Bügel (7) befestigten Blockiervorrichtungen mit wenigsten einem der Schenkel (9A, 9B) durch eine Kontaktierung in der der Benutzungsposition entsprechenden Blockierposition kooperieren.

8. Fahrzeug nach einem der Ansprüche 1 bis 7, **dadurch gekennzeichnet, dass** das vordere Antriebsrad (5) im Wesentlichen koaxial mit der Lenkstange (3) um die erste Rotationsachse (A) schwenkt.

9. Fahrzeug nach einem der Ansprüche 1 bis 8, **dadurch gekennzeichnet, dass** die Lenkstange (3) zwei koaxiale, ineinander gleitende Rohre (14, 15) und eine Nocke, die durch einen Druckknopf (32) betätigt werden kann, welcher zum Entblockieren der zwei Rohre (14, 15) ein Versenken eines Blockierstifts zwischen den zwei Rohren (14, 15) steuert, aufweist.

## Claims

1. Wheeled kick-scooter vehicle (1), comprising:
- a platform (2) of elongate shape, which is provided with a wheel (10) on its rear end and which a user may rest at least one foot on;
- a steering rod (3) capable of pivoting about a first axis (A) which is transversal to the direction of a forward movement of the vehicle (1), wherein the rod (3) comprises a first distal end featuring a steering device, like a handlebar (3A, 3B) or a knob, and comprises a second proximal end that is connected to a front wheel via at least one fork (4) straddling the front wheel (5);
wherein the platform (2) is mounted pivotably relative to a second axis (8) that is transversal to the first axis (A), the platform (2) being thus movable between two extreme positions, namely an active rolling position, in which it is substantially perpendicular to the rod (3), and a folded-up position in parallel to the rod (3) and close to the latter;
wherein the vehicle (10) further comprises an elongate-shaped compression mechanism, e.g. a spring (16), the first end of which is connected to the platform (2) at a distance unequal to zero from the second axis (8), and the second end of which is connected to the rod (3) for the purpose of exerting a lifting force on the platform (2), inducing a torque around the second pivot axis (8) of the platform (2); **characterised in that** the platform (2) is connected to the rod (3) via a bracket (7) that is shaped like an inverse U and spans the fork (4) while permitting a rotation of the latter, wherein the U-shaped bracket (7) features two spaced-apart parallel arms (7A, 7B) and the second pivot axis (8) is arranged on the free ends of the parallel arms (7A, 7B) of the bracket (7), wherein the second rotational axis (8) is situated within a region that is delimited by the surface of the front wheel (5).

2. Vehicle according to claim 1, **characterised in that** the compression mechanism is fixated on the bracket (7) by its second end.

3. Vehicle according to one of claims 1 or 2, **characterised in that** the compression mechanism is fixated on the platform (2) by its first end in such a way that it exerts a lifting force on the latter in its two extreme positions.

4. Vehicle according to one of claims 1 to 3, **characterised in that** the fixation points of the compression mechanism are arranged around the second rotational axis (8) in such a way that, in a rotation of the steering rod (3) when going through a given angle position, an inversion of the torque that is exerted by the mechanism is induced.

5. Vehicle according to one of claims 1 to 4, **characterised in that** at least one abutment (28) is provided which is connected to the bracket (7) and prevents, in a first direction, a rotation of the latter - and thus of the rod (3) - around the second rotational axis (8).

6. Vehicle according to one of claims 1 to 5, **characterised in that** the vehicle comprises locking members, which are operable, by a foot or by any other means, for locking a rotation of the platform (2) about the second axis (8) in a second direction, wherein the locking members advantageously comprise a lever (23) which is articulated on the bracket (7), between a first blockage position, in which it prevents the reciprocal rotation of the platform (2) around the second rotational axis (8) relative to the rod (3), and a second position, in which it permits the rotation of the platform (2).

7. Vehicle according to one of claims 1 to 6, **characterised in that** the platform is connected to the second rotational axis (8) by two opposing parallel legs (9A, 9B), arranged on both sides of the front wheel (5) and of the arms (7A, 7B) of the bracket (7) and featuring a force-fit connection in pivoting about the second axis (8), wherein the locking members, which are fixated on the bracket (7), cooperate with at least one of the legs (9A, 9B) by contacting in the blockage position which corresponds to the usage position.

8. Vehicle according to one of claims 1 to 7, **characterised in that** the drive front wheel (5) pivots around the first rotational axis (A) substantially coaxially with the steering rod (3)

9. Vehicle according to one of claims 1 to 8, **characterised in that** the steering rod (3) comprises two coaxial tubes (14, 15), one of which gliding in the other one, as well as a cam which is actuatable by a push button (32) and controls a sinking of a pin between the coaxial tubes (14, 15), thus unlocking the two coaxial tubes (14, 15).
